# EUROPEAN PATENT APPLICATION

(11) **EP 4 279 260 A1**
(43) Date of publication of application: **22.11.2023**
(21) Application number: 22173545.9
(22) Date of filing: 16.05.2022
(51) Int. Cl.: B32B 3/12, B32B 27/30, B32B 37/14, E04B 1/86, E04F 13/14

(54) **PANEL ELEMENT, METHOD FOR FORMING A PANEL ELEMENT AND EXTRUSION DEVICE**

(71) Applicant: Vilox AB, 256 67 Helsingborg (SE)
(72) Inventor: Markovski, Bobby, 254 48 Helsingborg (SE)
(74) Representative: AWA Sweden AB

(57) **Abstract**

The present invention relates to a panel element (100), such as a floor panel, a wall panel, a ceiling panel or a decking panel. The panel element (100) comprises a first substrate (102) made of a synthetic composite material (102a) comprising at least 20% by weight of mineral material, and a second substrate (104) made of a distance material (104a) embedded or recessed in the first substrate (102). The distance material (104a) has a bulk density which is lower than a bulk density of the synthetic composite material (102a). The panel element (100) comprises at least two opposing side edge portions (103) formed solely by the first substrate (102). A method (300) for forming a panel element (100) and an extrusion device (200) configured to form a panel element (100) are also provided.

## Description

### Filed of the Invention

The present invention generally relates to a panel element, such as a floor panel, a wall panel, a ceiling panel or a decking panel, a method for forming a panel element and an extrusion device configured to form a panel element.

### Background of the Invention

Panel elements or panels of various kinds, shapes and material are used throughout numerous applications e.g. in the construction industry. Such panels are for instance used in floorings, ceilings and walls in buildings. Panels are moreover used in facades and roofing.

Panels used in the construction industry serve different purposes and are therefore exhibiting different characteristics. Some panels are used for decorative purposes whereas other panels are used for technical purposes. A decorative indoor panel may be simple from a technical perspective while having to fulfil high demands when it comes to its aesthetic appearance. On the other hand, a roofing panel must generally withstand rough weather conditions and hence fulfil high technical standards. The visual appearance of a roofing panel is however generally not as important as its technical capabilities in terms of weather protection and durability.

However, when it comes to panels for instance used in floorings and walls of wet rooms both high technical and aesthetic demands come into play simultaneously. A wooden panel is generally appealing but suffers form low wear and water resistance. Hence, wooden floorings are generally not suitable in rooms with high wear and in wet rooms. Correspondingly, wooden wall or ceiling panels are generally not suitable in the same types of spaces.

Several types of panels with tailored appearances and high technical capabilities have been proposed. An example of a high technical capability panel is a so called SPC, stone plastic composite, panel. Such panels are commonly fabricated by being extruded. SPC panels are commonly used in floorings, so called SPC floorings. SPC Floorings are based on a new generation material which can substitute traditional floor covering material such as laminate flooring, wooden flooring and stone flooring.

Another example of a high technical capability panel is a so-called WPC, wood plastic composite, panel. Such panels are commonly fabricated by being extruded. A WPC panel is in many aspects similar to an SPC panel but is generally somewhat lighter owing from the fact that the WPC panel includes foamed PVC. WPC panels are like SPC panels commonly used in floorings. Such floorings are then called WPC floorings. Both SPC and WPC floorings are commonly referred to as resilient floorings. Other examples of resilient floorings are LVT or PVC floor covering, natural linoleum, rubber, polyurethane, synthetic polymers, modular multilayer product, floorings.

Both SPC and WPC based panels are wear and water resistant but suffers from other drawbacks. A major drawback resides in the high-density materials used. Especially for SPC based panels, the panels are quickly becoming very heavy. This problem is also pronounced for WPC based panels. The fact that heavy materials are used in SPC and WPC panels brings about high transportation costs as well as high material cost. Moreover, the panels will typically have to be made with a certain thickness in order to fulfil requirements related to failure, bending stiffens and handling. This in turn brings about that the panels become unnecessarily heavy.

It is therefore been proposed to remove material from the backside of a panel in order to reduce the weight of the panel at hand. Such process is however time consuming and results in a large amount om waste material which has to be recycled and reused in order to not get wasted.

Another approach is to extrude the material of the panel such that longitudinal voids are formed during the extrusion. This approach results in troublesome manufacturing leaving it hard to accurately control the thickness and overall surface smoothness of the panel being produced.

Another approach proposed in US 11,149,441 B2 is to reduce the weight of the panels by patterning the backside of the panel thereby forming voids. This approach results in troublesome manufacturing leaving it hard to accurately control the thickness of the panel being produced. Moreover, the structural integrity and stiffness of the panel may also become negatively affected for instance resulting in undesired warp of the panel.

### Summary of the invention

In view of the above, it is an object of the present invention is to provide an improved panel element, such as a floor panel, a wall panel, a ceiling panel or a decking panel, an improved method for forming a panel element and an improved extrusion device configured to form a panel element.

Another object is to provide such panel element which has a reduced weight.

Another object is to provide such panel element which has a lower weight to volume ratio.

Another object is to provide such panel element which has an increased structural integrity in relation to its weight.

Another object is to provide such panel element which has an increased strength in relation to its weight.

Another object is to provide such panel element which is more environmentally friendly.

Another object is to provide such panel element which requires less material during manufacturing.

Another object is to provide such a method for forming a panel element and extrusion device which simplifies panel element production.

Another object is to provide such a method for forming a panel element and extrusion device which are capable of producing a panel element of a high technical standard.

It is also an object to provide a cost effective panel element, a cost effective method for forming a panel element and a cost effective extrusion device.

To achieve at least one of the above objects and also other objects that will be evident from the following description, a panel element having the features defined in claim 1, a method for forming a panel element according to claim 10 and an extrusion device according to claim 15 are provided according to the present inventive concept. Preferred variations to the inventive concept will be evident from the dependent claims.

More specifically, according to a first aspect, there is provided a panel element, such as a floor panel, a wall panel, a ceiling panel or a decking panel, comprising: a first substrate made of a synthetic composite material comprising at least 20% by weight of mineral material, and a second substrate made of a distance material embedded or recessed in the first substrate, wherein the distance material has a bulk density which is lower than a bulk density of the synthetic composite material, wherein the panel element comprising at least two opposing side edge portions formed solely by the first substrate.

Hereby an improved panel element is provided.

The panel element includes a first substrate and a second substrate. The second substrate is embedded or recessed in the first substrate.

The first substrate is made of a synthetic composite material an comprises at least 20 % by weight of mineral material. The first substrate may be made of a thermoplastic material which is combined with a mineral material. The first substrate may be made of a thermosetting material which is combined with a mineral material. The mineral material may emanate from ground or milled rock.

The first substrate may be made of CaCO₃ which is combined with PVC. The first substrate may be made of CaCO₃ which is combined with PVC and additives. CaCO₃ may be provided in form of a powder.

The first substrate may thus be regarded a filled synthetic composite material.

The second substrate is made of a distance material. It should be noted that within the context of this application the term "distance material" may be any type of material which is included in the panel element and contributes to the overall structural integrity and/or strength of the panel element or to any type of material which is included in the panel element and contributes to the structural integrity of the panel element during its formation. The distance material of the second substate may consequently act as a mandrel for the synthetic composite material of the first substrate while forming the panel. The distance material of the second substate may thus contribute to the structural integrity of the panel element during its formation.

The distance material of the second substrate is embedded or recessed in the first substrate.

When the second substrate is "embedded" in the first substrate, a major part of a combined surface area of all exterior surfaces of the second substrate are in contact with the first substrate. In other words, the second substrate is typically substantially enclosed by the first substrate when being embedded therein.

When the second substrate is "recessed" in the first substrate, a significant portion of an exterior surface of the second substrate is exposed and thus visible from an outside of the panel element. In other words, a majority of the external surfaces of the second substrate are typically enclosed by the first substrate while a significant portion of at least one external surface is exposed when the second substrate is recessed in the first substrate. Further, when the second substrate is recessed in the first substrate, portions of a plurality of exterior surfaces of the second substrate may be exposed and thus visible from an outside of the panel element. For instance, a major surface and a portion of a thickness of the second substrate may be in contact with the first substrate. A portion of a thickness of the second substrate may extend all the way out to an edge of the panel element such that a side edge surface of the panel element is jointly formed by the first substrate and the second substrate.

The distance material has a bulk density which is lower than a bulk density of the synthetic composite material. Hence, the overall density of the bulk material is lower than the overall density of the synthetic composite material. The distance material may however comprise materials having relatively speaking high densities as long as the bulk density thereof is lower than the bulk density of the synthetic composite material.

The distance material may be a lightweight material. The distance material may be a non-compact material. The distance material may be a porous material.

The panel element comprises at least two opposing side edge portions formed solely by the first substrate. The at least two opposing side edge portions formed solely by the first substrate may be directly opposing. The at least two opposing side edge portions formed solely by the first substrate may be indirectly opposing. The at least two opposing side edge portions formed solely by the first substrate may for instance be arranged in a staggered arrangement on opposing side edges of the panel element, such that the at least two opposing side edge portions formed solely by the first substrate are indirectly opposing each other.

Hence, at least two portions of opposing edges of the panel element are typically formed solely by the first substrate. The side edge portions formed solely by the first substrate may extend along a complete edge of the panel element. The side edge portions formed solely by the first substrate may extend along a portion of an edge of the panel element. Such side edge portions may be distributed along an edge of the panel element. The side edge portions formed solely by the first substrate may extend along a major portion of an edge of the panel element. The side edge portions formed solely by the first substrate may extend along a minor portion of an edge of the panel element.

The side edge portions formed solely by the first substrate may extend over a complete thickness or height of the panel element. In other words, a complete thickness of a side edge surface of the panel element may be occupied by the first substrate.

The side edge portions formed solely by the first substrate may extend over a portion of a thickness of the panel element. In other words, a first portion of a thickness of a side edge surface of the panel element may be occupied by the first substrate and a second portion of the thickness of said side edge surface may consequently be occupied by the second substrate. In yet other words, a side edge surface of the panel element may be jointly formed by the first substrate and the second substrate.

The side edge portions formed solely by the first substrate may include minor portions of a supporting material used to connect discrete distance material elements each forming the second substrate or forming part of the second substrate of the panel element.

The panel element may include a top coating. Such top coating may be arranged on a side of the panel being visible after installing the panel element, such as a top side. The top coating may have wear resistive properties. The top coating may have UV-protective properties.

The panel element may include a decorative top coating. Such top coating may be arranged on a side of the panel being visible after installing the panel, such as a top side or a front side. The decorative top coating may have decorative features. The decorative top coating may resemble the appearance of a natural material such as wood or stone.

The panel element may include a bottom coating. Such bottom coating may be arranged on a side of the panel not being visible after installing the panel, such as a bottom side or a back side. The bottom coating may have sound attenuating properties. The bottom coating may have insulation properties.

The distance material may have a bulk density below 2000 kg / m³, preferably below 1000 kg / m³, which is advantageous in that the panel element may be made lighter. The panel element may be made lighter in comparison to a panel element which is solely formed by a synthetic composite material.

The thickness of the distance material may be 1-30 mm, preferably 1-8 mm.

The thickness of the distance material may be 20-80 %, preferably 30-70%, of a total thickness of the panel element.

The at least two opposing side edge portions formed solely by the first substrate may have a width of 10-25 mm, preferably 15-20 mm, which is advantageous in that the side edge portions may contribute the overall strength of the panel element and/or that the side edge portions may be utilised for providing a reliable connection or transition to adjacent panels. 50-100 %, preferably 60-98 % of a height of the at least two opposing side edge portions formed solely by the first substrate may be formed by the first substrate, which is advantageous in that the overall material consumption of the panel may be further reduced.

When the second substrate is embedded in the first substrate, the first substrate may form a top layer and a bottom layer with the second substrate arranged therebetween, which is advantageous in that a strong and yet light panel element may be formed. The fact that the first substrate may form a top layer and a bottom layer with the second substrate arranged therebetween may result in a panel element which exhibits an improved bending stiffness and/or torsional stiffness.

45-100 %, preferably 60-95 % of the top layer and the bottom layer may be backed by the second substrate, which is advantageous in that a light and yet strong panel element may be provided.

The thickness of the top layer may be 0.5-15 mm, preferably 1-10 mm.

The thickness of the bottom layer may be 1-10 mm, preferably 1.5-6 mm.

The top layer may be patterned and/or contoured.

A portion of the second substrate may be exposed at a side edge of the panel element, which is advantageous in that a location of the second substrate in relation to the first substrate may be determined visually.

A respective portion of the second substrate may be exposed at edge regions of opposing side edges of the panel element, which is advantageous in that a location of the second substrate in relation to the first substrate may be determined visually while impacting the strength of the panel element to a limited extent.

A respective portion of the second substrate may be exposed at corner regions of opposing side edges of the panel element, which is advantageous in that a location of the second substrate in relation to the first substrate may be determined visually while impacting the strength of the panel element to a limited extent. Such exposed portions of the second substrate may be exposed at side edge surfaces of the panel element. The exposed portions of the second substrate may thus be visible from a lateral side of the panel element. Such exposed portions of the second substrate may be exposed at a top surface of the panel element. The exposed portions of the second substrate may thus be visible from a top side of the panel element. When such exposed portions of the second substrate are exposed at a top surface of the panel element, the exposed portions of the second substrate may advantageously be used for synchronising an application position of a top coating and/or a decorative top coating. Such top coating and/or a decorative top coating may therefore comprise openings or similar configured to be applied at locations corresponding to the exposed portions of the second substrate. By providing openings or similar in such top coating and/or a decorative top coating an error in a synchronisation between the panel element and the top coating and/or a decorative top coating may be detected.

Such exposed portions of the second substrate may be exposed at a bottom surface of the panel element. The exposed portions of the second substrate may thus be visible from a bottom side of the panel element. When such exposed portions of the second substrate are exposed at a bottom surface of the panel element, the exposed portions of the second substrate may advantageously be used for synchronising an application location of a bottom coating. Such bottom coating may therefore comprise openings or similar configured to be applied at locations corresponding to the exposed portions of the second substrate. By providing openings or similar in such bottom coating an error in a synchronisation between the panel element and the bottom coating may be detected.

The respective exposed portion of the second substrate may comprise a feature configured to be detected via an optical detection process.

The feature configured to be detected via an optical detection process may comprise a colour, a shape, a pattern, an embossing, or a combination thereof.

The distance material of the second substrate may comprises a material chosen from the group consisting of: a honeycomb material, a polymeric foam, a plurality of parallelly extending hollow tube sections, a glass foam, a metal comprising foam, a fibre reinforced polymeric material, a closed cell PVC foam, a material including cavates, a material including cavates of different geometric shapes, and a cardboard material, which is advantageous in that a strong and yet light panel element may be provided. Other advantageous properties that may be enabled by said materials include sound attenuation properties, insulation properties and stiffening properties.

The distance material of the second substrate may comprise an open cell material provided with a top layer and a bottom layer for closing a cell structure of the open cell material. By providing a top layer and a bottom layer for closing a cell structure of the open cell material, material of the first substrate may be prevented or counteracted from entering into the cells of the cell structure of the open cell material. This is advantageous in that the panel element may be fabricated in a controlled manner where the properties of the distance material is not affected by the synthetic composite material of the first substrate.

The distance material of the second substrate may comprise a honeycomb material provided with a top layer and a bottom layer for closing a cell structure of the honeycomb material.

When the second substrate is embedded in the first substrate, the distance material may be provided with a channel extending in a normal direction to a major surface of the panel, wherein the first substrate may extend through the channel, which is advantageous in that the panel may be made stronger. The fact that the first substrate may extend through channels of the second substrate brings about that portions of the first substrate arranged on opposite sides of the second substrate may be connected to each other via the channel of the second substrate, thereby providing a stronger panel element which is less prone to delamination.

The at least two opposing side edge portions may comprise complementary coupling members configured for mutual coupling of adjacent panel elements, which is advantageous in that a panel element assembly comprising a plurality of panel elements may be formed in a simple manner. Such panel element assembly may be formed without using any tools. Such panel element assembly may form a floor, a wall or a ceiling. Such panel element assembly may form a decking. Such panel element assembly may form a plurality of connected panel assembly sections, such as a plurality of walls.

Further, when complementing the panel element with complementary coupling members configured for mutual coupling of adjacent panel elements, the complementary coupling members may be made stronger as compared to a traditional panel element void of any distance material since the at least two opposing side edge portions may be made thicker without significantly increasing the weight and/or material consumption of the panel.

The complementary coupling members may be machined form material of the first substrate, which is advantageous in that strong and reliable coupling members may be formed integrally with the first substrate.

The complementary coupling members may be machined form material of the first substrate and the second substrate, which is advantageous in that strong and reliable coupling members may be formed integrally with the first substrate and the second substrate.

According to another aspect of the invention, there is provided a method for forming a panel element, such as a floor panel, a wall panel, a ceiling panel or a decking panel, the method comprising: providing a first extrusion flow of a synthetic composite material comprising at least 20% by weight of mineral material, providing a second extrusion flow of the synthetic composite material, providing a distance material, applying the first and the second extrusion flows from opposite sides of the distance material, such that the first and the second extrusion flows form a first substrate embedding or recessing the distance material forming a second substrate, thereby forming the panel element comprising at least two opposing side edge portions formed solely by the first substrate.

Hereby an improved method for forming a panel element is provided.

The details and advantages of this aspect of the invention are largely analogous to those of the previous aspect of the invention, wherein reference is made to the above.

However, in summary, the method provides formation of a panel element by providing a first and a second extrusion flow of a synthetic composite material comprising at least 20% by weight of mineral material and applying the first and second extrusion flows from opposite sides of the distance material. The application is typically conducted by one or more extruders in a manner such that the first and the second extrusion flows form a first substrate embedding or recessing the distance material forming a second substrate thereby forming the panel element. Moreover, the application is conducted in a manner such that the formed panel element comprises at least two opposing side edge portions formed solely by the first substrate.

Hence, when forming a panel element in which the first and the second extrusion flows form a first substrate embedding the distance material forming a second substrate, the first and the second extrusion flows are typically applied over a complete width of both opposing sides of the distance material or over a majority of the width of both opposing sides of the distance material.

On the other hand, when forming a panel element in which the first and the second extrusion flows form a first substrate recessing the distance material forming a second substrate, one of the first and the second extrusion flows, typically the first extrusion flow, is typically applied over a complete width of one opposing sides of the distance material whereas the other one of the first and the second extrusion flows, typically the second extrusion flow, is typically applied over portions, such as opposing edge portions, of the other one of the opposing sides of the distance material.

The distance material may be provided in roll form or sheet form and may be fed to an application point at which the first and the second extrusion flows are applied from opposite sides of the distance material, which is advantageous in that that the panel element may be formed continuously at a single location. By providing the distance material in roll form and feeding the distance material to an application point at which the first and the second extrusion flows are applied from opposite sides of the distance material, an elongated web or substrate including a plurality of panel elements may be formed continuously. Such elongated web may subsequently be separated into individual panel elements. By providing the distance material in roll form simplified handling and storage of the distance material may be realized. By providing the distance material in sheet form and feeding the distance material to an application point at which the first and the second extrusion flows are applied from opposite sides of the distance material, the size, shape and number of panel elements being formed at the same time may be controlled to advantage. A sheet of distance material may correspond to a panel element. A sheet of distance material may correspond to a plurality of panel elements.

The distance material may be fed through an extrusion die in which the first and the second extrusion flows are applied from opposite sides of the distance material, by feeding the distance material between a first nozzle of the extrusion die configured to provide the first extrusion flow, and a second nozzle of the extrusion die configured to provide the second extrusion flow, which is advantageous in that the in that that the panel element may be formed continuously at a single location.

The first nozzle may comprises a plurality of nozzle elements, wherein each nozzle element may be configured to be individually controlled such that an amount of the first extrusion flow provided to the extrusion die varies over a width of the extrusion die, and/or wherein the second nozzle may comprise a plurality of nozzle elements, wherein each nozzle element may be configured to be individually controlled such that an amount of the second extrusion flow provided to the extrusion die varies over the width of the extrusion die. This is advantageous in that an amount and/or distribution of the synthetic composite material in the first extrusion flow provided to the extrusion die may be varied over a width of the extrusion die and hence over the width of the panel element being formed. This is further advantageous in that an amount and/or distribution of the synthetic composite material in the second extrusion flow provided to the extrusion die may be varied over a width of the extrusion die and hence over the width of the panel element being formed. Hence, an amount and/or distribution of the synthetic composite material may be controlled on either on of the opposite sides of the panel element such that the distance material of the second substrate becomes embedded or recessed in the first substrate made of the synthetic composite material.

The first nozzle may comprise a plurality of nozzle elements. The plurality of nozzle elements of the first nozzle may have different sizes and/or different shapes. That is, the plurality of nozzle elements of the first nozzle may include at least two nozzle elements having different sizes and/or shapes.

The second nozzle may comprise a plurality of nozzle elements. The plurality of nozzle elements of the second nozzle may have different sizes and/or different shapes. That is, the plurality of nozzle elements of the second nozzle may include at least two nozzle elements having different sizes and/or shapes.

This is advantageous in that an amount and/or distribution of the synthetic composite material in the first extrusion flow provided to the extrusion die may be varied over a width of the extrusion die and hence over the width of the panel element being formed. This is further advantageous in that an amount and/or distribution of the synthetic composite material in the second extrusion flow provided to the extrusion die may be varied over a width of the extrusion die and hence over the width of the panel element being formed.

The first extrusion flow may be provided from more than one extruder and/or that the second extrusion flow may be provided from more than one extruder, such that the first substrate of the panel element may comprise more than one material on the same side and/or on different sides thereof, which is advantageous in that characteristics of the panel element may be tailored to suit specific needs.

The distance material may be provided in roll form and may be fed to a first application point at which the first extrusion flow may be applied form a first side of the distance material, and to a second application point at which the second extrusion flow may be applied from a second side of the distance material being opposite to the first side of the distance material, which is advantageous in that the first substrate may be formed continuously at different physical locations.

The first extrusion flow may come from a first extruder and that the second extrusion flow may come from a second extruder, such that the first substrate of the panel element may comprise different materials on different sides thereof.

A plurality of panel elements may be formed in a continuous and/or parallel process, which is advantageous in that a plurality of panel elements may be formed in a simple manner. A plurality of panel elements may be formed after each other. A plurality of panel elements may be formed in parallel. A plurality of panel elements may be formed after each other and in parallel.

The distance material may be provided in form of a plurality of discrete distance material elements connected by a supporting material, which is advantageous in that individual panel elements each including an individual distance material element may be formed while applying the first and the second extrusion flows from opposite sides of the distance material.

The supporting material may comprise threads connecting neighbouring discrete distance material elements.

The supporting material may comprise a stringlike member connecting neighbouring discrete distance material elements.

The supporting material may comprise a net connecting neighbouring discrete distance material elements.

The supporting material may be integrally formed with the discrete distance material elements.

The method may further comprise, subjecting the panel element to a thickness control operation, which is advantageous in that a final thickness of the formed panel element may be accurately controlled.

The thickness control operation may comprises feeding the panel element through a nip formed between two thickness control rollers, which is advantageous in that the thickness of the formed panel element may be controlled while being formed continuously. Further by feeding the panel element through a nip formed between two thickness control rollers a lamination between the fist substrate and the second substrate may be improved. Hence, by feeding the panel element through a nip formed between two thickness control rollers, the fist substrate and the second substrate may by firmly pressed together such that the respective substrates adhere more strongly to each other. Hereby delamination of the first substrate and the second substrate may be counteracted.

The two thickness control rollers may be heated, which is advantageous in that the thickness may be accurately controlled by locally softening the synthetic composite material of the first substrate.

According to another aspect of the invention, there is provided an extrusion device configured to form a panel element according to the first aspect, the device comprising: a first extrusion nozzle configured to provide a first extrusion flow of the synthetic composite material, a second extrusion nozzle configured to provide a second extrusion flow of the synthetic composite material, and a space formed between the first extrusion nozzle and the second extrusion nozzle, the space being configured to receive the distance material such that the first and the second extrusion flows are applied from opposite sides of the distance material, such that the first and the second extrusion flows form the first substrate embedding or recessing the distance material forming the second substrate, thereby forming the panel element comprising at least two opposing side edge portions formed solely by the first substrate.

Hereby an improved extrusion device configured to form a panel element is provided.

The details and advantages of this aspect of the invention are largely analogous to those of the previous aspects of the invention, wherein reference is made to the above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief Description of the Drawings

The above, as well as additional objects, features and advantages of the present invention, will be better understood through the following illustrative and non-limiting detailed description of preferred variants of the present inventive concept, with reference to the appended drawings, where the same reference numerals will be used for similar elements, wherein:
Fig 1 conceptually illustrates a cross sectional perspective view of a panel element in which a second substrate is embedded in a first substrate.
Fig 2a conceptually illustrates a cross sectional perspective view of a panel element in which a second substrate is recessed in a first substrate.
Fig 2b conceptually illustrates a cross sectional perspective view of a different panel element in which a second substrate is recessed in a first substrate.
Fig 3 conceptually illustrates a cross sectional perspective view of a panel element in a second substrate is embedded in a first substrate.
Fig 4 conceptually illustrates a cross sectional perspective view of a panel element in a second substrate is embedded in a first substrate.
Fig 5 conceptually illustrates a cross sectional perspective view of a panel element provided with coupling members.
Fig 6 conceptually illustrates a cross sectional view of a panel element provided with coupling members, a top coating and a bottom coating.
Fig 7 conceptually illustrates a cross sectional perspective view of a panel element provided with embossed features.
Fig 8a conceptually illustrates a perspective view of a floor panel.
Fig 8b conceptually illustrates a perspective view of a different floor panel.
Fig 9 conceptually illustrates a perspective view of a wall or ceiling panel.
Fig 10 conceptually illustrates a perspective view of an extrusion device.
Fig 11 conceptually illustrates a partial cross sectional perspective view of the extrusion device of Fig 10.
Fig 12 conceptually illustrates a perspective view of a distance material.
Fig 13 is a block scheme of a method for forming a panel element.

### Detailed Description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

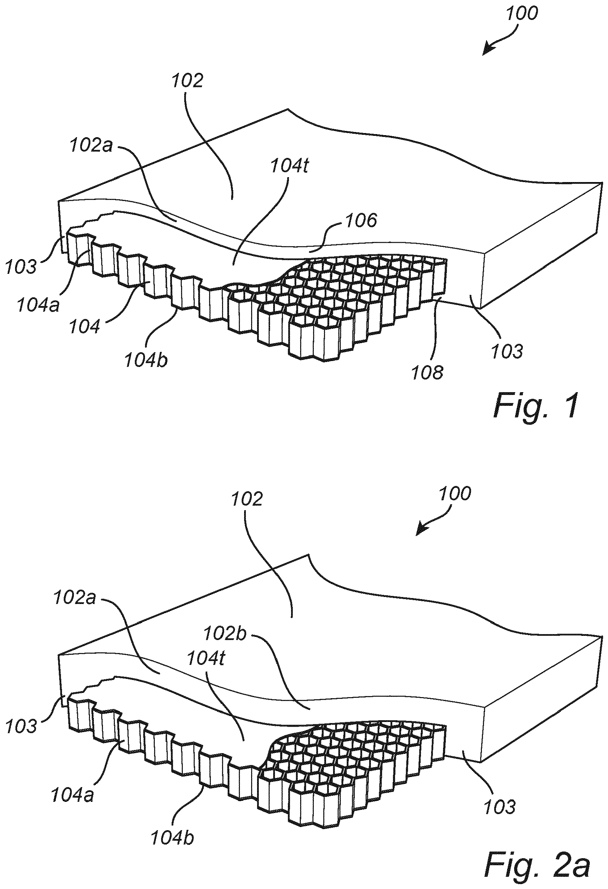

Initially, a panel element 100, such as a floor panel, a wall panel, a ceiling panel or a decking panel, will be described with reference to Figs 1 and 2a.

The panel elements 100 of Figs 1 and 2a each have a first substrate 102 made of a synthetic composite material 102a. The synthetic composite material 102a comprises at least 20% by weight of mineral material. More specifically, the synthetic composite material 102a of the depicted panel elements 100 of Figs 1 and 2a are made of a CaCO₃ powder which is combined with PVC. Additives may be used to advantage to tailor the properties of the first substrate 102. An amount of the mineral material of the first substrate 102 may vary greatly. A content of the mineral material of the first substrate 102 is at least 20% by weight. However, a content of the mineral material of the first substrate 102 may constitute as much as 90% by weight.

The panel elements 100 of Figs 1 and 2a each have a second substrate 104 made of a distance material 104a. The distance material 104a has a bulk density which is lower than a bulk density of the synthetic composite material 102a of the first substrate 102. In the depicted panel elements 100 of Figs 1 and 2a the distance material 104a used is a honeycomb material.

Further, the panel elements 100 of Figs 1 and 2a each have two opposing side edge portions 103 formed solely by the first substrate 102.

In the panel element 100 of Fig 1 the second substrate 104 is embedded the first substrate 102. That is, the first substrate 102 is enclosing the second substrate 104 as can be seen in Fig. 1. Hence, the first substrate 102 forms a top layer 106 and a bottom layer 108 with the second substrate 104 arranged therebetween. The top layer 106 and the bottom layer 108 are of equal thickness. As can be seen in Fig. 1, the first substrate 102 forms the two opposing side edge portions 103.

On the other hand, in the panel element 100 of Fig 2a the second substrate 104 is recessed the first substrate 102. That is, the first substrate 102 of Fig 2a is mainly arranged above the second substrate 104 as can be seen in Fig. 1. However, the first substrate 102 extends down on lateral side portions of the second substrate 104 thereby forming the two opposing side edge portions 103. Hence, in the panel element 100 of Fig 2a, the distance material 104a forming the second substrate 104 is exposed at a lower side of the panel element 100. The distance material 104a forming the second substrate 104 is typically exposed at a side not being visible after installing the panel element 100. The distance material 104a forming the second substrate 104 is typically exposed at a back side of the panel element 100.

In the depicted panel elements 100 of Figs 1 and 2a the two opposing side edge portions 103 formed solely by the first substrate 102 has a width of 17 mm. In general, the two opposing side edge portions 103 formed solely by the first substrate 102 may have a width of 10-25 mm, preferably 15-20 mm.

As can be seen in Fig 1, a major extension of the top layer 106 and the bottom layer 108 may be backed by the second substrate 104. In Fig 1 about 80 % of the extension of the top layer 106 and the bottom layer 108 are backed by the second substrate 104. A thickness of the top layer 106 and the bottom layer 108 of the panel element of Fig 1 is about 2 mm. Other thickness may be used to advantage.

In practice, when forming a panel element 100 in which the second substrate 104 is embedded in the first substrate, 45-90 %, preferably 60-80 % of the top layer 106 and the bottom layer 108 may be backed by the second substrate 104. The reaming portions of the top layer 106 and the bottom layer 108 may typically correspond to the opposing side edge portions 103. The thicknesses of the top layer 106 and the bottom layer 108 may however be varied to suit different needs.

Similarly, as can be seen in Fig 2a, a major extension of first substrate 102 is backed by the second substrate 104. In Fig 2a about 80 % of the first substrate is backed by the second substrate 104. A thickness of a portion 102b of the first substrate 102 which is backed by the second substrate 104 of the panel element of Fig 1 is about 2 mm.

In practice, when forming a panel element 100 in which the second substrate 104 is recessed in the first substrate, 45-90 %, preferably 60-80 % of the first substrate may be backed by the second substrate 104. The reaming portion of the first substrate typically correspond to the opposing side edge portions 103. The thickness of the portion 102b of the first substrate 102 which is backed by the second substrate 104 of the panel element 100 of Fig 1 may however be varied to suit different needs.

The distance material 104a of the second substrate 104 of the panel element 100 according to the present in inventive concept may be varied greatly. By varying the distance material 104a of the second substrate 104 several properties of the panel element 100 may be adapted.

For instance, the weight of the panel element 100 may be reduced by utilizing a distance material 104a exhibiting a low bulk density.

For instance, a stiffness of the panel element 100 may be enhanced by utilizing a distance material 104a exhibiting a high stiffness.

For instance, a structural integrity of the panel element 100 may be enhanced by utilizing a distance material 104a which bonds strongly to the synthetic composite material 102a of the first substrate 102.

Examples of suitable distance materials 104a of the second substrate 104 include but are not limited to a honeycomb material, a polymeric foam, a plurality of parallelly extending hollow tube sections, a glass foam, a metal comprising foam, a fibre reinforced polymeric material, a closed cell PVC foam, a material including cavates, a material including cavates of different geometric shapes, and a cardboard material.

All said materials for the distance material 104a has a bulk density below 2000 kg / m³. However, the materials for the distance material 104a preferably has a bulk density below 1000 kg / m³. Several of the materials for the distance material 104a has a significantly lower bulk density.

Said materials used for the distance material 104a may be combined to arrive at properties not offered by the materials when used alone.

For instance, hollow tubes may be embedded in a polymeric form to thereby provide a distance material 104a.

By utilising said materials for the distance materials 104a of the second substrate 104 the overall properties may also be enhanced in terms of sound attenuation and insulation to give a few more non-limiting examples.

A plurality of said materials for the distance materials 104a of the second substrate 104 are so-called open cell materials in which a cell or a cavity of the material at hand accessible form an outside of the material. An example of an open cell material is a general honeycomb material. In a general honeycomb material, the generally hexagonal cavities of the honeycomb material may be accessed from an outside of the material. In order to make such honeycomb material and other open cell materials stronger and to also counteract material form entering the cavities or cells, such open cell materials may be provided with a top layer 104t and a bottom layer 104b for closing a cell structure of the open cell material.

As previously discussed, the distance material 104a of the second substrate 104 of the panel elements 100 of Figs 1 and 2a is a honeycomb material. It should however be noted that other distance materials may be used to advantage in the panel elements 100 of Figs 1 and 2a. The honeycomb material making up the distance material 104a of the second substrate 104 of the panel elements 100 of Figs 1 and 2a has been provided with a top layer 104t and a bottom layer 104b for closing a cell structure of the open cell honeycomb material.

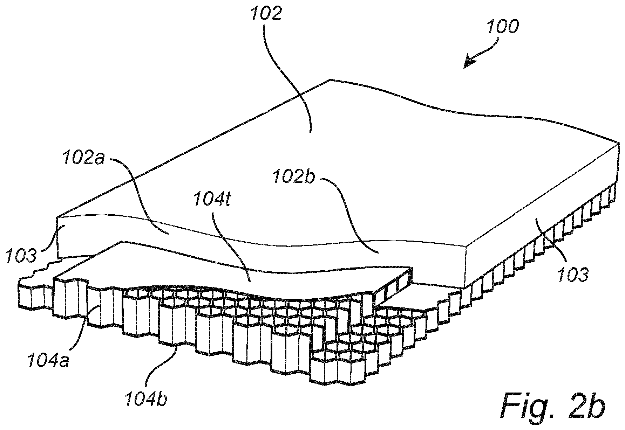

Hence, the top layer 104t and the bottom layer 104b of the honeycomb distance material 104 prevents synthetic composite material 102a of the first substrate 102 form entering the otherwise open cavities of the honeycomb distance material 104 when forming the panel elements 100 of Figs 1 and 2.

Further, the top layer 104t and the bottom layer 104b of the distance material 104 contributes to an overall increased strength and dimension stability of the distance material 104.

Now also turning to Fig 2b. Here is conceptually depicted a panel element 100. The panel element 100 of Fig 2b is similar to the panel element 100 of Fig 2a. The panel element 100 of Fig 2b and has a first substrate 102 made of a synthetic composite material 102a, like the panel element 100 of Fig 2a. A second substrate 104 made of a distance material 104a is recessed in the first substrate 102. The overall composition and materials used in the panel element of Fig 2b are similar to what has been described above in conjunction with Fig 2a. Such details will therefore not be repeated in order to avoid undue repetition.

The first substrate 102 of Fig 2b is mainly arranged above the second substrate 104 as can be seen in Fig. 2b. However, the second substrate 104 of Fig 2b has a general stepped shape. The stepped shape of the second substrate 104 in combination with the shape of the first substrate 102 results in that an upper portion of the second substrate 104 being recessed in the first substrate 102 whereas a lower portion of the second substrate 104 is arranged below the first substrate 102 such that the lower portion of the second substrate 104 is exposed at lateral side edge portions of the substrate 100. As can be seen in Fig 2b, lateral side edge surfaces of the panel element 100 are jointly formed by the first substrate 102 and the second substrate 104. More specifically, an upper portion of said lateral side edge surfaces of the panel element 100 are formed by the first substrate 102 and a lower portion of said lateral side edge surfaces of the panel element 100 are formed by the second substrate 104.

Hence, the first substrate 102 extends down on lateral side portions of the second substrate 104 thereby forming the two opposing side edge portions 103 solely formed by the first substrate 102. Hence, in the panel element 100 of Fig 2b, the distance material 104a forming the second substrate 104 is exposed at a lower side of the panel element 100 as well as on lateral side edges thereof.

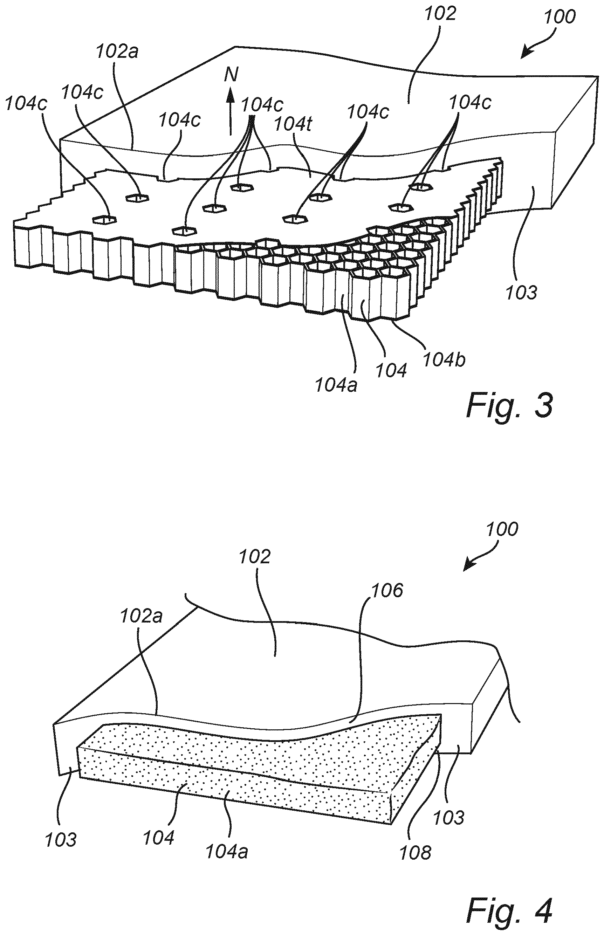

Now also turning to Fig 3. Here is conceptually depicted a panel element 100. The panel element 100 of Fig 3 is similar to the panel element 100 of Fig 1. The panel element 100 of Fig 3 and has a first substrate 102 made of a synthetic composite material 102a, like the panel element 100 of Fig 1. The first substrate 102 embeds a second substrate 104 made of a distance material 104a. The overall composition and materials used in the panel element of Fig 3 are similar to what has been described above in conjunction with Fig 1. Such details will therefore not be repeated in order to avoid undue repetition.

The distance material 104a of the second substrate 104 of the panel element 100 of Fig 3 is made of a honeycomb material. It should however be noted that other distance materials may be used to advantage in the panel element 100 of Fig 3. Hence, the distance material 104a of the second substrate 104 is made of an open cell material. However, in Fig 3, the distance material 104a is provided with a plurality of channels 104c extending in a normal direction N to a major surface of the panel 100. As can be seen in Fig 3, the first substrate 102 extends through the channels 104.

In the depicted panel element 100 of Fig 3 the channels 104c are formed by opening up certain cavities of the honeycomb material otherwise provided with the top layer 104t and the bottom layer 104b as described above in conjunction with Figs 1 and 2a. Such opening up may be made by penetrating the top layer 104t and the bottom layer 104b. Alternatively, the material forming the top layer 104t and the bottom layer 104b may be provided with openings at regular distances. Other principles of forming channels 104c may be used to advantage.

The channels 104c contributes to the overall strength of the panel element 100 by connecting the top layer 106 and a bottom layer 108 of the first substrate 102 through the respective channels 104c. That is the first substrate 102 extends through the channels 104c, thereby connecting the top layer 106 and a bottom layer 108 thereof.

Further, the fact that first substrate 102 extends through the channels 104c while connecting the top layer 106 and a bottom layer 108 thereof counteracts or prevents delamination of the first substrate 102 and the second substrate 104 of the panel element 100 of Fig 3.

Alternatively, or additionally, an external surface or external surfaces of the distance material 104a of the second substrate 104 may be patterned to increase the bonding between the distance material 104a of the second substrate 104 and the synthetic composite material 102a of the first substrate 102. Hereby delamination of the first substrate 102 and the second substrate 104 may be counteracted.

Now also turning to Fig 4. Here is conceptually depicted a panel element 100. The panel element 100 of Fig 4 is similar to the panel element 100 of Fig 1. The panel element 100 of Fig 4 and has a first substrate 102 made of a synthetic composite material 102a, like the panel element 100 of Fig 1. The first substrate 102 embeds a second substrate 104 made of a distance material 104a.

In Fig 4 the distance material 104a of the second substrate is made of a polymer foam material. The polymer foam material forming the distance material 104a has a closed cell structure. Hence, the distance material 104a of Fig 4 is void of any top and bottom layers for closing cell structures thereof.

The first substrate 102 of Fig 4 forms a top layer 106 and a bottom layer 108 with the second substrate 104 arranged therebetween. The top layer 106 and the bottom layer 108 are of different thicknesses. The top layer 106 of the first substrate 102 is thicker than the bottom layer 108 of the first substrate 102. By making the top layer 106 of the first substrate 102 thicker than the bottom layer 108 of the first substrate 102, an increased wear resistance may be achieved while still providing a strong panel element 100.

A second substrate 104 made of a distance material 104a in form of a polymer foam material as in Fig. 4 may to advantage be formed shortly prior to being included in the panel element 100. Such second substrate 104 made of a distance material 104a in form of a polymer foam material may to advantage formed in an extrusion process just before the panel element 100 is formed. Such second substrate 104 formed in an extrusion process just before the panel element 100 is formed may be cooled such that the structural integrity thereof is sufficient for the second substrate 104 to withstand the forces it is subjected to during formation of the panel element 100. Such second substrate 104 formed in an extrusion process just before the panel element 100 is formed may thus not have solidified completely during formation of the panel element 100.

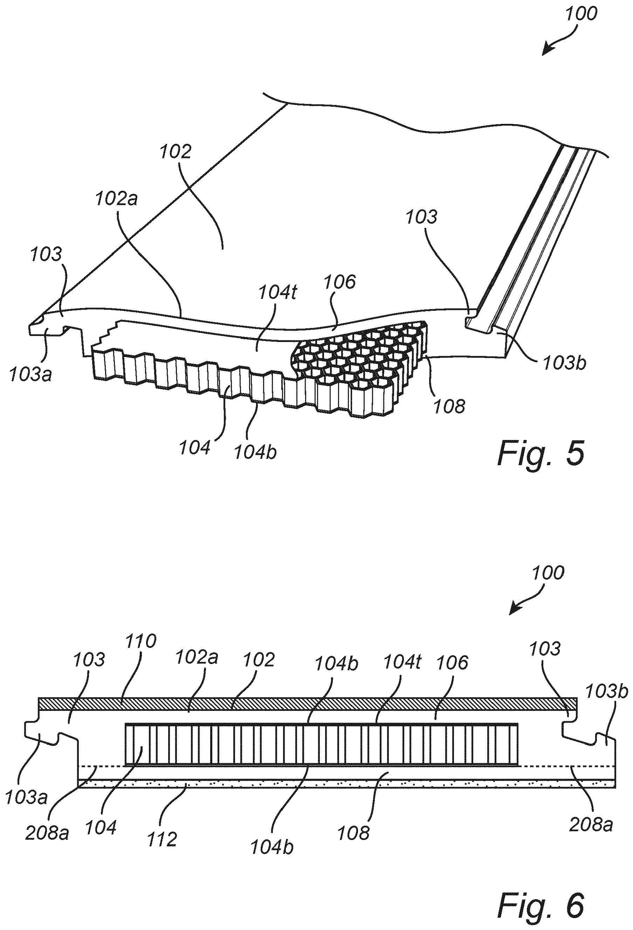

Now also turning to Fig 5. Here is conceptually depicted a panel element 100. The panel element 100 of Fig 5 is the panel element of Fig 1 after a subsequent processing of the two opposing side edge portions 103. Hence, panel element 100 of Fig 5 is similar to the panel element 100 of Fig 1. In other words, the overall composition and materials used in the panel element of Fig 5 are consequently the same as those described above in conjunction with Fig 1. Such details will therefore not be repeated in order to avoid undue repetition.

However, the panel element 100 of Fig 5 has been provided with complementary coupling members 103a, 103b. The complementary coupling members 103a, 103b are configured for mutual coupling of adjacent panel elements 100. The complementary coupling members 103a, 103b include a male coupling member 103a and a female coupling member 103b. The complementary coupling members 103a, 103b are machined form material of the first substrate 102. More specifically, the complementary coupling members 103a, 103b are machined form material of the two opposing side edge portions 103 of the first substrate 102. The complementary coupling members 103a, 103b are machined form material of the first substrate 102 along opposing edges of the panel element 100 of Fig 3. The complementary coupling members 103a, 103b are machined form material of the first substrate 102 by using a milling cutter. The male coupling member 103a is machined form material of the first substrate 102 while using a first milling tool. The female coupling member 103b is machined form material of the first substrate 102 while using a second different milling tool. Other techniques for forming complementary coupling members 103a, 103b may be used to advantage. Other shapes and designs of the complementary coupling members 103a, 103b may be used to advantage.

A panel element assembly may consequently be formed by connecting a plurality of panel elements 100 to each other while using the complementary coupling members 103a, 103b of the respective panels used in the panel element assembly. Such panel element assembly may be formed by connecting a plurality of panel elements 100 to each other without using any tools. This means that a plurality of panel elements may form e.g. a flooring, a ceiling, a wall panel assembly or a decking panel assembly.

Now also turning to Fig 6. Here is conceptually depicted a panel element 100. The panel element 100 of Fig 6 is the panel element of Figs 1 and 5 after a subsequent processing where a top coating 110 and a bottom coating 112 has been applied to the panel element 100. Hence, panel element 100 of Fig 6 is thus similar to the panel element 100 of Figs 1 and 5. In other words, the overall composition and materials used in the panel element of Fig 6 are consequently highly similar to what has been described above in conjunction with Figs 1 and 5. Such details will therefore not be repeated in order to avoid undue repetition.

The top coating 110 of Fig 6 serves a number of purposes. The top coating 110 have wear resistive properties. The top coating 110 also serves an aesthetic purpose. For that reason, the top coating 110 resembles the appearance of a wooden floor plank. The top coating may thus be said to be a decorative top coating 110. Such top coating 110 may exhibit other appearances. Such top coating 110 may resemble stone. Such top coating 110 may have colour. Such top coating 110 may be patterned etc.

A further coating having UV-protective properties may be applied on the top coating to advantage. Alternatively, or additionally, UV protecting agents may be included in the top coating 110.

The bottom coating 112 is a polymer foam layer. Such polymer foam layer may reduce sounds from walking when the panel element 100 is used in flooring. Such polymer foam layer may increase the insulation properties of the panel element 100. Other types of bottom coatings may be used to suit specific needs.

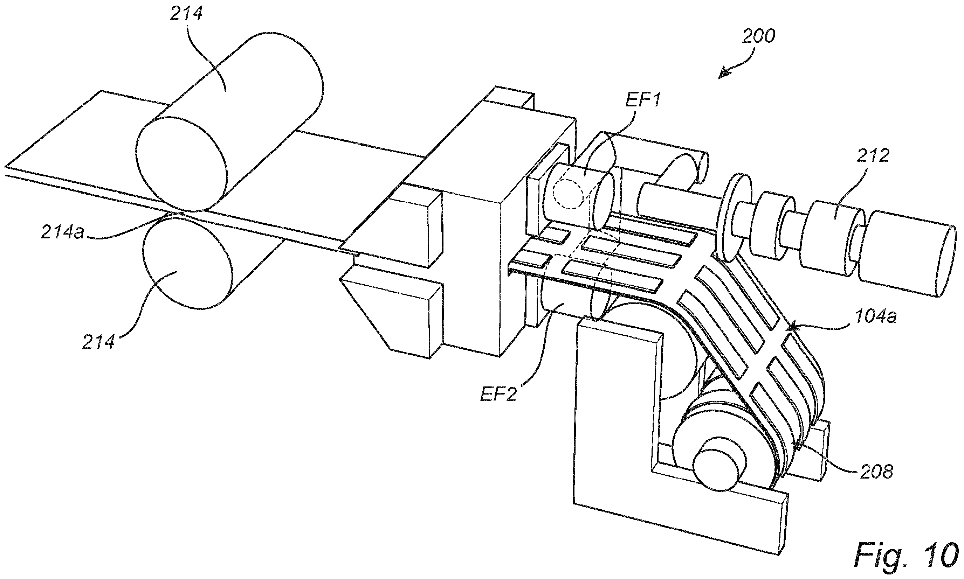

As can be seen in Fig 6, the panel element 100 includes portions of a supporting material 208a which have been used for connecting the distance material 104a of the second substrate 104 to neighbouring elements of distance material during manufacturing of the panel element 100. The supporting material 208a and the manufacturing of the panel element 100 will be described in greater detail below with reference to Figs 10-12. Reference is therefore made to the below.

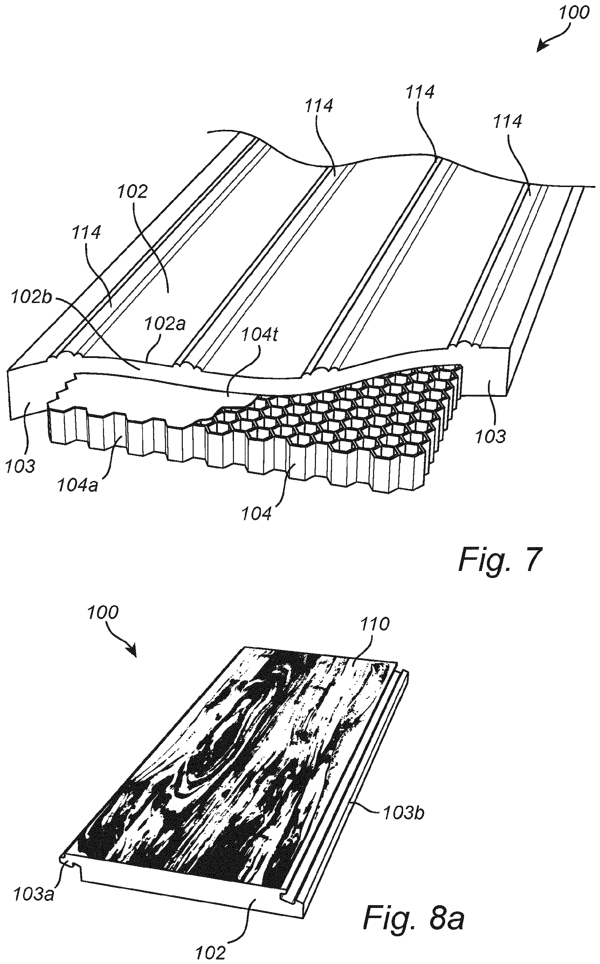

Now also turning to Fig 7. Here is conceptually depicted a panel element 100. The panel element 100 of Fig 7 is similar to the panel element 100 of Fig 2a. The panel element 100 of Fig 7 and has a first substrate 102 made of a synthetic composite material 102a, like the panel element 100 of Fig 2a. The first substrate 102 recesses a second substrate 104 made of a distance material 104a. The overall composition and materials used in the panel element of Fig 7 are similar to what has been described above in conjunction with Fig 2a. Such details will therefore not be repeated in order to avoid undue repetition.

As can be seen in Fig 7, the top surface of the panel element 100 has been provided with embossed features 114. The embossed features 114 of the panel 100 of Fig 7 may be decorative features. The embossed features 114 of the panel 100 of Fig 7 may contribute to a strength of the panel element 100. The depicted embossed features 114 of the panel 100 of Fig 7 are integrally formed with the first substrate 102. The depicted embossed features 114 are thus formed by the synthetic composite material 102a of the first substrate 103. The depicted embossed features 114 makes the panel element 100 of Fig 7 resemble a plurality of profiled wooden panel planks arranged side by side.

Now also referring to Fig 8a, here is conceptually depicted a panel element 100 of the type described above in conjunction with Figs 1 and 6. The panel element of Fig 8a is a floor plank resembling a wooden floor plank. As can be seen in fig 8a, the top coating 110 resembles the appearance of a wooden surface. A female coupling member 103b is visible at the lower portion of a longitudinal edge of the panel element 100. A male coupling member 103a is visible at the upper portion of a longitudinal edge of the panel element 100.

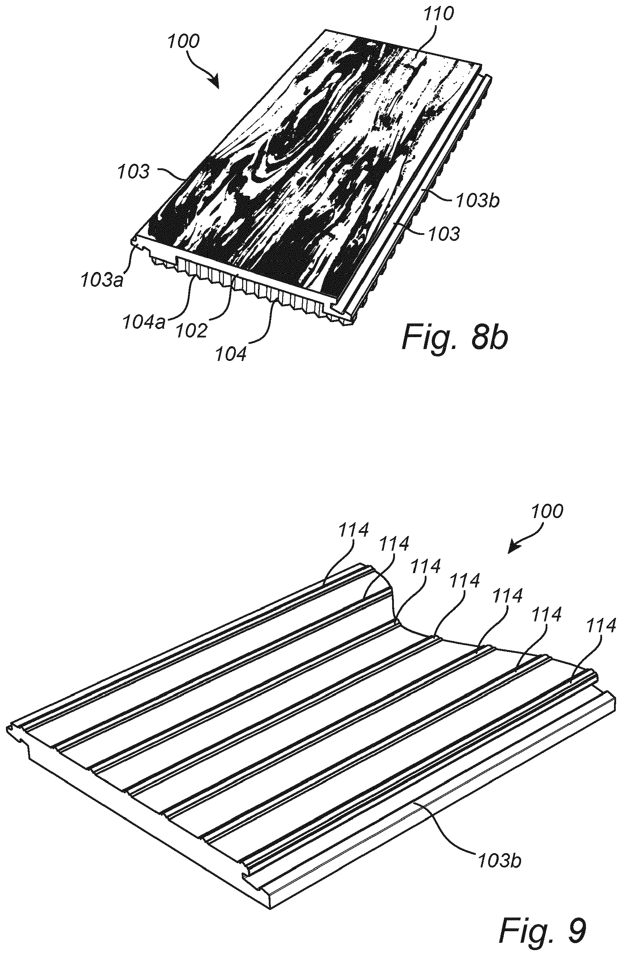

Now also referring to Fig 8b, here is conceptually depicted a panel element 100 of the type described above in conjunction with Fig 2b. The panel element of Fig 8b is like the panel element 100 of Fig 8a a floor plank resembling a wooden floor plank. The floor plank of Fig 8b is fabricated form a panel element of the type described above in conjunction with Fig 2b. As can be seen in fig 8b, the top coating 110 resembles the appearance of a wooden surface. A female coupling member 103b is visible at the lower portion of a longitudinal edge of the panel element 100. A male coupling member 103a is visible at the upper portion of a longitudinal edge of the panel element 100.

As can be seen in Fig 8b, the distance material 104a is exposed at lateral side edge surfaces of the panel element 100 as well as on transversal side edge surfaces of the panel element 100. The distance material 104a is also exposed at an underside of the panel element 100. As can also be seen in Fig 8b, lateral side edge surfaces and transversal side edge surfaces of the panel element 100 are jointly formed by the first substrate 102 and the seconds substrate 104. More specifically, an upper portion of said lateral side edge surfaces and said transversal side edge surfaces of the panel element 100 are formed by the first substrate 102. Correspondingly, a lower portion of said lateral side edge surfaces and said transversal side edge surfaces of the panel element 100 are formed by the second substrate 104.

Moreover, the second substrate 104 is recessed in the first substrate 102 as described above in conjunction with Fig 2b. Hence, the first substrate 102 extends down on lateral side portions of the second substrate 104 thereby forming two opposing side edge portions 103 solely formed by the first substrate 102.

Now also referring to Fig 9, here is conceptually depicted a panel element 100 of the type described above in conjunction with Figs 2a and 7. The panel element of Fig 9 is a wall panel resembling a plurality of profiled wooden wall planks. As can be seen in fig 9, the top surface of the panel element has been provided with seven longitudinally extending embossed features 114 making the top surface of the panel element resemble the appearance of seven profiled wooden wall planks extending in parallel. A female coupling member 103b is visible at the lower portion of the longitudinal edge of the panel element 100.

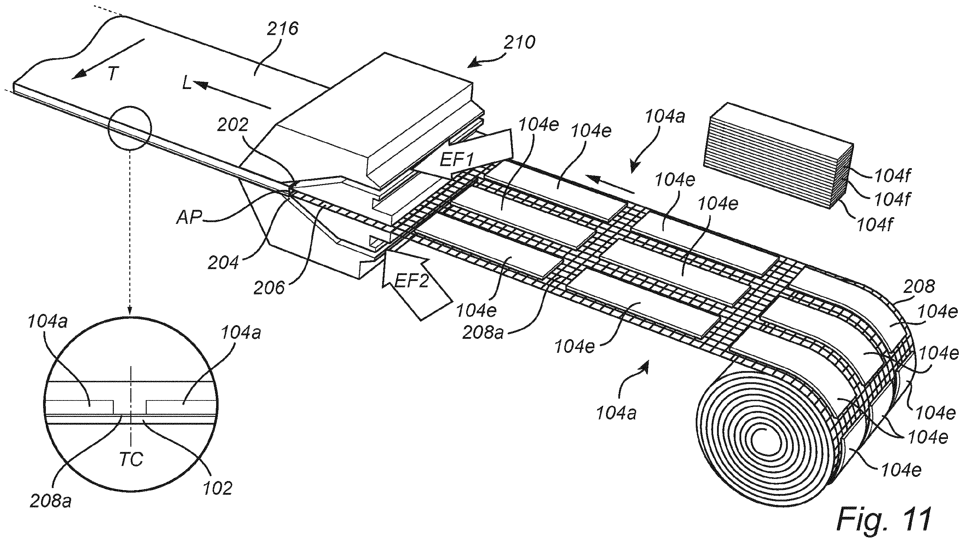

Now also turning to Figs 10 and 11. Here are conceptually depicted an extrusion device 200 which is used for forming panel elements 100 of the types described above in conjunction with Figs 1-9. In the following the extrusion device 200 and its operation will be described while mainly referring to Figs 10 and 11. Fig 10 is a general overview of the extrusion device 200 whereas Fig 11 is a partial cross-sectional view of a portion of the extrusion device 200 more clearly illustrating how panel elements 100 of the types described above in conjunction with Figs 1-9 are formed in an extrusion process using the extrusion device 200.

The extrusion device 200 is provided with a first extrusion nozzle 202 configured to provide a first extrusion flow EF1 of the synthetic composite material 102a used to form the first substrate 102.

The extrusion device 200 is provided with a second extrusion nozzle 204 configured to provide a second extrusion flow EF2 of the synthetic composite material 102a used to form the first substrate 102.

A space 206 is formed between the first extrusion nozzle 202 and the second extrusion nozzle 204. As is best seen in Fig 11, the space 206 is configured to receive the distance material 104a being fed into the space 206 from a right-hand side of Figs 10 and 11. When the distance material 104a is fed through the space 206 as indicated in Fig 11 by an arrow the first and the second extrusion flows EF1, EF2 are applied from opposite sides of the distance material 104a.

The synthetic composite material 102a is typically heated above its glass transmission temperature while being fed in the first and the second extrusion flows EF1, EF2 and applied from opposite sides of the distance material 104a. The synthetic composite material 102a is typically subsequently cooled in order to harden and form the first substrate 102. Relevant temperatures for the first and the second extrusion flows EF1, EF2 depend on the composition of the synthetic composite material 102a at hand. Such temperatures are well known in the art and moreover generally indicated by the supplier of the synthetic composite material 102a.

The first and the second extrusion flows will thus form a first substrate 102 of the type described in conjunction with Figs 1-9 while being applied from opposite sides of the distance material 104a being fed into and through the space 206.

Depending on how the first extrusion nozzle 202 and the second extrusion nozzle 204 are designed and/or controlled, the first substrate 102 being formed will embed or recess the distance material 104a forming the second substrate 104.

The first extrusion nozzle 202 and the second extrusion nozzle 204 are designed such that the panel elements 100 being formed each has at least two opposing side edge portions 103 formed solely by the first substrate 102.

As can be seen best in Fig 11, the distance material 104a may be provided in roll form 208. Hence, the distance material 104a is typically provided on a roll 208. Alternatively, the distance material 104a may be provided as separate elements 104f, as illustrated by the stack of separate elements 104f next to the roll 208 in Fig 11. The distance material 104a is typically fed from the roll 208 to an application point AP at which the first and the second extrusion flows EF1, EF2 are applied from opposite sides of the distance material 104a. The application point AP is in the depicted extrusion device 200 the point where the first and the second extrusion flows EF1, EF2 leaves their respective extrusion nozzles 202, 206 and are applied from opposite sides of the distance material 104a.

In other words, the distance material 104a is typically fed through an extrusion die 210 in which the first and the second extrusion flows EF1, EF2 are applied form opposite sides of the distance material 104a, by feeding the distance material between the first nozzle 202 of the extrusion die 210 and the second nozzle 204 of the extrusion die 210. As discussed above, the first nozzle 202 of the extrusion die 210 is typically configured to provide the first extrusion flow EF1, and a second nozzle 204 of the extrusion die 210 is typically configured to provide the second extrusion flow EF2.

The depicted first nozzle 202, includes a plurality of nozzle elements. The plurality of nozzle elements of the first nozzle 202 are distributed over a width of the extrusion die 210, i.e. over a width of the distance material 104a being fed through the gap 206.

Correspondingly, the depicted second nozzle 204, includes a plurality of nozzle elements. The plurality of nozzle elements of the second nozzle 204 are distributed over a width of the extrusion die 210, i.e. over a width of the distance material 104a being fed through the gap 206.

The nozzle elements of the first nozzle 202 and the second nozzle 204 may be individually controlled.

The fact that the nozzle elements of the first nozzle 202 may be individually controlled brings about that an amount of the first extrusion flow EF1 provided to the extrusion die 210 and hence the distance material 104a may be varied over the width of the extrusion die 210 and hence over the width of the distance material 104a.

Correspondingly, the fact that the nozzle elements of the second nozzle 204 may be individually controlled brings about that an amount of the second extrusion flow EF2 provided to the extrusion die 210 and hence the distance material 104a may be varied over the width of the extrusion die 210 and hence over the width of the distance material 104a at an opposite side thereof.

By the individual nozzle elements of the first nozzle 202 and the second nozzle 204 it is thus possible to control how the first substrate 102 is formed.

It is consequently possible by controlling the individual nozzle elements of the first nozzle 202 and the second nozzle 204 to choose that the distance material 104a forming the second substrate 104 is to be embedded in the first substrate 102 being formed by the first and second extrusion flows EF1, EF2. This may typically be done by providing the first and second extrusion flows EF1, EF2 over the complete width of the distance material 104a being fed through the gap 206 of the extrusion die 210.

Similarly, it is possible by controlling the individual nozzle elements of the first nozzle 202 and the second nozzle 204 to choose that the distance material 104a forming the second substrate 104 is to be recessed in the first substrate 102 being formed by the first and second extrusion flows EF1, EF2. This may typically be done by providing the first extrusion flow EF1 over the complete width of the distance material 104a being fed through the gap 206 of the extrusion die 210, while only providing the second extrusion flow EF2 at certain points, such as points closed to the edges of the distance material 104a, of the width of the distance material 104a.

In Figs 10 and 11 it is depicted how the first and second extrusion flows EF1, EF2 are fed from the same extruder 212. However, the first and second extrusion flows EF1, EF2 may be fed from different extruders. By this arrangement, different materials may be applied form different sides of the distance material 104a. For instance, a less sophisticated or less costly material may be used on a backside of the panel element 100 being formed.

In Figs 10 and 11 it is depicted how the first and second extrusion flows EF1, EF2 are applied to the distance material 104a at the application point AP. However, the distance material may alternatively be fed to a first application point at which the first extrusion flow EF1 is applied from a first side of the distance material 104a, and to a second application point at which the second extrusion flow EF2 is applied from a second side of the distance material being opposite to the first side of the distance material. Hence, the first application point and second application point may be spaced apart along a feeding direction of the distance material 104a.

Subsequent to applying the first and second extrusion flows EF1, EF2 from opposite sides of the distance material 104a, the so formed panel element 100 or panel elements 100 may be subjected to a thickness control operation. Such thickness control operation may include feeding the panel element 100 or panel elements 100 through a nip 214a formed between two thickness control rollers 214. The nip 214a will then typically have a certain width which will correspond to a desired final thickness of the panel element 100 or panel elements 100 being formed. The formed panel element 100 or panel elements 100 may thus be pressed by the thickness control rollers 214 while being fed through the nip 214a formed therebetween. When feeding the panel element 100 or panel elements 100 through the nip 214a formed between two thickness control rollers 214, the panel element 100 or panel elements 100 are typically subjected to a high compressive pressure. Such compressive pressure may exert a force equal to several tonnes to the panel element 100 or panel elements 100 being fed through the nip 214a. The thickness control rollers 214 may be heated to facilitate the thickness control operation, by maintaining the panel element 100 or panel elements 100 at a temperature where the synthetic composite material 102a is sufficiently hot to have a viscosity suitable for the thickness control operation.

As is understood form the above, a plurality of panel elements 100 may be formed in a continuous process while feeding the distance material 104a through the gap 206 of the extrusion die 210 and simultaneously applying the first and second extrusion flows EF1, EF2 from opposite sides of the distance material 104a.

In order to achieve this the roll 208 of distance material may include distance material 204a for a plurality of panel elements 100 provided one after the other on the roll 208.

However, a plurality of panel elements 100 may to advantage be formed in a parallel process while feeding the distance material 104a through the gap 206 of the extrusion die 210 and simultaneously applying the first and second extrusion flows EF1, EF2 from opposite sides of the distance material 104a.

In order to achieve this the roll 208 of distance material may include distance material 204a for a plurality of panel elements 100 arranged at the roll 208 in parallel. This is best seen in Fig 11, where it is depicted that the distance material 104a of the roll 208 is provided in form of a plurality of discrete distance material elements 104e which are provided side by side and after each other in the roll 208.

The plurality of discrete distance material elements 104e of the roll 208 may be connected to each other by a supporting material 208a, as shown in Fig 11, so as to form the roll 208. The supporting material 208a may be integrally formed with the discrete distance material elements 104e of the roll 208. The supporting material 208a may be formed of a net connecting distance material elements 104e of the roll 208. The supporting material 208a may be formed of threads connecting the distance material elements 104e of the roll 208.

When a plurality of panel elements 100 are formed in a continuous and/or parallel process, the so formed panel elements are separated from each other to form individual panel elements 100 of the types described above in conjunction with Figs 1-9.

As is best seen in Fig 11 a plurality of panel elements 100 may be formed continuously and in parallel. This means that the web 216 or substrate 216 which exits the extrusion die 210 may include a plurality of panel elements 100 arranged after one other and in parallel within web 216.

In order to form individual panel elements 100 of the types described above in conjunction with Figs 1-9, the web 216 is typically cut at locations between the discrete distance material elements 104e included in the web 216. That is, the web 216 may be cut in longitudinal direction L, i.e. a feed direction, thereof and/or in a transversal direction T thereof in order to form individual panel elements 100.

Cutting of the web 216 may include sawing, milling, laser cutting and water cutting to give a few non limiting examples.

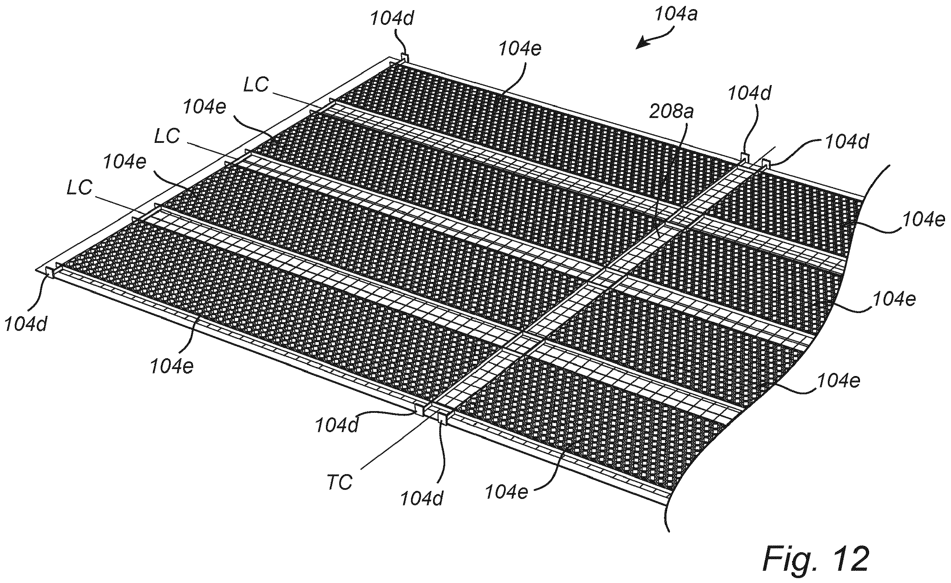

Now also turning to fig 12. In order to facilitate cutting of the web 216 at correct locations and hence to keep track of where the web 216 is to be cut the distance material 104a may be formed such that portions 104d thereof is exposed at opposing side edges of a panel element 100 or the web 216. The distance material 104a may alternatively or additionally be exposed at edge regions of a top side of panel elements 100 being formed. The distance material 104a may alternatively or additionally be exposed at regions of a bottom side of panel elements 100 being formed. The distance material 104a may alternatively or additionally be exposed at corner regions of at least some of the panel elements 100 being formed. That is the distance material 104a may be formed such that certain portions 104d or features 104d thereof are exposed after formation of the web 216. In practice, such certain features 104d of the distance material 104a may typically be exposed at longitudinal edges of the web 216. However, such certain features 104d of the distance material 104a may be exposed at a top side of the panel element 100 and/or at a bottom side of the panel element 100. The distance material 104a of Fig 12 is of the type illustrated in Fig 11. As is illustrated in Fig 12, the depicted distance material 104a includes four discrete distance material elements 104e provided side by side. Further, a number of discrete distance material elements 104e are arranged one after the other on the roll 208. The roll 208 has been omitted in Fig 12 for reasons of simplicity. The distance material 104a of Fig 12 include certain portions 104d or features 104d in form of bosses 104d which will become visible at the longitudinal edges of the web 216 after formation of the web 216. Such certain features 104d may be detected in an optical detection process such that the location of the discrete distance material elements 104e of the distance material 104a in relation to the web 216 may be determined.

By shaping the certain portions 104d or features 104d of Fig 12 slightly different, the portions 104d or features 104d may be made to become visible at a top side of the web 216 after formation of the web 216. The certain portions 104d or features 104d may then be used to synchronise application of a top coating 110, such as a decorative top coating 110. For that reason, a top coating 110, such as a decorative top coating 110, may be provided with a hole configuration which is configured to be applied in sync with the certain portions 104d or features 104d of the second substrate 104. In this way, also errors in application of the top coating 110 may be detected as a deviation, an offset or similar in said sync. If the certain portions 104d or features 104d are made visible at a top side of the web 216 after formation of the web 216, those certain portions 104d or features 104d are typically removed in subsequent processing steps such that those certain portions 104d or features 104d are not visible in the final product. For instance, if a floor plank is fabricated, the certain portions 104d or features 104d may be removed when milling complementary coupling members 103a, 103b.

By shaping the certain portions 104d or features 104d of Fig 12 slightly different, the portions 104d or features 104d may be made to become visible at a bottom side of the web 216 after formation of the web 216. The certain portions 104d or features 104d may then be used to synchronise application of a bottom coating 112 such as a sound attenuating bottom coating 110. For that reason, a bottom coating 112 may be provided with hole configuration which is configured to be applied in sync with the certain portions 104d or features 104d of the second substrate 104. In this way, also errors in application of the bottom coating 112 may be detected as a deviation, an offset or similar in said sync.

The distance material 104a may include a pattern, such as a hole patten, configured to feed the distance material 104a in a feed direction by means of a toothed drive or wheel.

After formation of the web 216 including the distance material 104a of Fig 12, the web 216 is typically cut in its transversal direction T along a line coinciding with the transversal cut line TC of the distance material 104a of Fig 12. A plurality of cut lines TC are typically repeated along the transversal direction T of the web 216.

Correspondingly, after formation of the web 216 including the distance material 104a of Fig 12, the web 216 is typically cut in its longitudinal direction L along a line coinciding with the longitudinal cut lines LC of the distance material 104a of Fig 12. A single panel element 100 may however occupy an entire width of the web 216.

Hence, by cutting the web 216 along a line coinciding with the transversal cut line TC and the longitudinal cut lines LC of the distance material 104a of Fig 12 individual panel elements 100 of the types described in conjunction with Figs 1-9 may be formed. Hence, when separating the individual panel elements 100 by cutting, the cuts will typically be located between the discrete distance material elements 104e such that the individual panel elements 100 have at least two opposing side edge portions 103 formed solely by the first substrate 102. Such opposing side edge portions 103 may include cut through portions of the supporting material 208a.

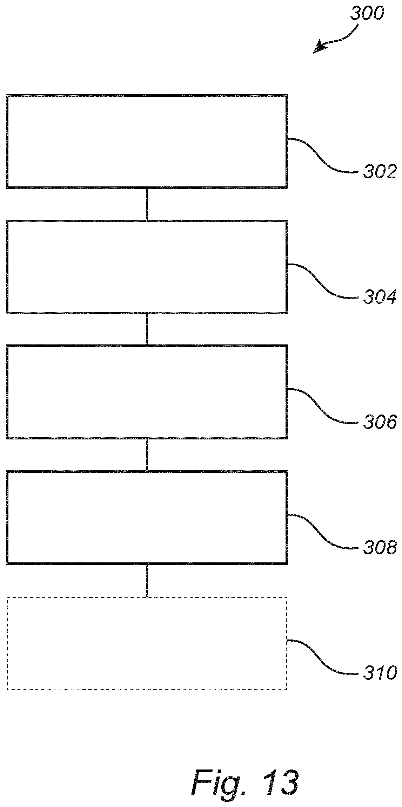

A method 300 for forming a panel element 100, such as a floor panel, a wall panel, a ceiling panel or a decking panel will now be described with reference to Fig 13.

In a first step 302 of the method 300 a first extrusion flow EF1 of a synthetic composite material 102a comprising at least 20% by weight of mineral material is provided.

In a second step 304 of the method 300 a second extrusion flow EF2 of the synthetic composite material 102a is provided.

In a third step 306 of the method 300 a distance material 104a is provided.

In a fourth step 308 of the method 300 the first and the second extrusion flows EF1, EF2 are applied from opposite sides of the distance material 104a, such that the first and the second extrusion flows EF1, EF2 form a first substrate 102 embedding or recessing the distance material 104a forming a second substrate 104, thereby forming the panel element 100 comprising at least two opposing side edge portions 103 formed solely by the first substrate 102.

The method 300 may also include subjecting 310 the panel element 100 to a thickness control operation.

Although the figures may show a specific order of method steps, the order of the steps may differ from what is depicted. Also, two or more steps may be performed concurrently or with partial concurrence. Such variation will depend on the software and hardware systems chosen and on designer choice. All such variations are within the scope of the disclosure. Additionally, even though the inventive concept has been described with reference to specific exemplifying variants thereof, many different alterations, modifications and the like will become apparent for those skilled in the art. Variations to the disclosed variants may be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

Further, it will be appreciated that the present inventive concept is not limited to the variants shown. Several modifications and variations are thus conceivable within the scope of the invention which thus is defined by the appended claims.

### Itemised list of Exemplifying Embodiments

IEE1. Panel element, such as a floor panel, a wall panel, a ceiling panel or a decking panel, comprising:
   a first substrate made of a synthetic composite material comprising at least 20% by weight of mineral material, and
   a second substrate made of a distance material embedded or recessed in the first substrate,
   wherein the distance material has a bulk density which is lower than a bulk density of the synthetic composite material,
   wherein the panel element comprising at least two opposing side edge portions formed solely by the first substrate.
IEE2. Panel element according to IEE1, wherein the distance material has a bulk density below 2000 kg / m³, preferably below 1000 kg / m³.
IEE3. Panel element according to IEE1 or IEE2, wherein each of the at least two opposing side edge portions formed solely by the first substrate has a width of 10-25 mm, preferably 15-20 mm.
IEE4. Panel element according to any one of the preceding lEEs, wherein when the second substrate is embedded in the first substrate, the first substrate forms a top layer and a bottom layer with the second substrate arranged therebetween.
IEE5. Panel element according to IEE4, wherein 45-100 %, preferably 60-95 % of the top layer and the bottom layer are backed by the second substrate.
IEE6. Panel element according to any one of the preceding lEEs, wherein a portion of the second substrate is exposed at a side edge of the panel element.
IEE7. Panel element according to any one of the preceding lEEs, wherein the distance material of the second substrate comprises a material chosen from the group consisting of: a honeycomb material, a polymeric foam, a plurality of parallelly extending hollow tube sections, a glass foam, a metal comprising foam, a fibre reinforced polymeric material, a closed cell PVC foam, a material including cavates, a material including cavates of different geometric shapes, and a cardboard material.
IEE8. Panel element according to any one of the preceding lEEs, wherein the distance material of the second substrate comprises an open cell material provided with a top layer and a bottom layer for closing a cell structure of the open cell material.
IEE9. Panel element according to any one of the preceding lEEs, wherein when the second substrate is embedded in the first substrate, the distance material is provided with a channel extending in a normal direction to a major surface of the panel, wherein the first substrate extends through the channel.
IEE10. Panel element according to any one of the preceding lEEs, wherein the at least two opposing side edge portions comprise complementary coupling members configured for mutual coupling of adjacent panel elements.
IEE11. Panel element according to IEE10, wherein the complementary coupling members are machined form material of the first substrate.
IEE12. Method for forming a panel element, such as a floor panel, a wall panel, a ceiling panel or a decking panel, the method comprising:
   providing a first extrusion flow of a synthetic composite material comprising at least 20% by weight of mineral material,
   providing a second extrusion flow of the synthetic composite material, providing a distance material,
   applying the first and the second extrusion flows from opposite sides of the distance material, such that the first and the second extrusion flows form a first substrate embedding or recessing the distance material forming a second substrate, thereby forming the panel element comprising at least two opposing side edge portions formed solely by the first substrate.
IEE13. Method according to IEE12, wherein the distance material is provided in roll form or sheet form and is fed to an application point at which the first and the second extrusion flows are applied from opposite sides of the distance material.
IEE14. Method according to IEE12 or IEE 3, wherein the distance material is fed through an extrusion die in which the first and the second extrusion flows are applied form opposite sides of the distance material, by feeding the distance material between a first nozzle of the extrusion die configured to provide the first extrusion flow, and a second nozzle of the extrusion die configured to provide the second extrusion flow.
IEE15. Method according to IEE14, wherein the first nozzle comprises a plurality of nozzle elements, wherein each nozzle element is configured to be individually controlled such that an amount of the first extrusion flow provided to the extrusion die varies over a width of the extrusion die, and/or wherein the second nozzle comprises a plurality of nozzle elements, wherein each nozzle element is configured to be individually controlled such that an amount of the second extrusion flow provided to the extrusion die varies over the width of the extrusion die.
IEE16. Method according to IEE12, wherein the distance material is provided in roll form and is fed to a first application point at which the first extrusion flow is applied from a first side of the distance material, and to a second application point at which the second extrusion flow is applied from a second side of the distance material being opposite to the first side of the distance material.
IEE17. Method according to any one of IEE12- IEE16, wherein a plurality of panel elements (100) is formed in a continuous and/or parallel process.
IEE18. Method according to any one of IEE12- IEE17, wherein the distance material is provided in form of a plurality of discrete distance material elements connected by a supporting material.
IEE19. Method according to any one of IEE12- IEE18, the method further comprises:
   subjecting the panel element to a thickness control operation.
IEE 20. Method according to IEE19, wherein the thickness control operation comprises feeding the panel element through a nip formed between two thickness control rollers.
IEE21. Extrusion device configured to form a panel element according to any one of IEE1- IEE11, the device comprising:
   a first extrusion nozzle configured to provide a first extrusion flow of the synthetic composite material,
   a second extrusion nozzle configured to provide a second extrusion flow of the synthetic composite material, and
   a space formed between the first extrusion nozzle and the second extrusion nozzle, the space being configured to receive the distance material such that the first and the second extrusion flows are applied from opposite sides of the distance material, such that the first and the second extrusion flows form the first substrate embedding or recessing the distance material forming the second substrate, thereby forming the panel element comprising at least two opposing side edge portions formed solely by the first substrate.

## Claims

1. Panel element (100), such as a floor panel, a wall panel, a ceiling panel or a decking panel, comprising:
a first substrate (102) made of a synthetic composite material (102a) comprising at least 20% by weight of mineral material, and
a second substrate (104) made of a distance material (104a) embedded or recessed in the first substrate (102),
wherein the distance material (104a) has a bulk density which is lower than a bulk density of the synthetic composite material (102a),
wherein the panel element (100) comprising at least two opposing side edge portions (103) formed solely by the first substrate (102).

2. Panel element (100) according to claim 1, wherein the distance material (104a) has a bulk density below 2000 kg / m³, preferably below 1000 kg / m³.

3. Panel element (100) according to claim 1 or 2, wherein each of the at least two opposing side edge portions (103) formed solely by the first substrate (102) has a width of 10-25 mm, preferably 15-20 mm.

4. Panel element (100) according to any one of the preceding claims, wherein when the second substrate (104) is embedded in the first substrate (102), the first substrate (102) forms a top layer (106) and a bottom layer (108) with the second substrate (104) arranged therebetween.

5. Panel element (100) according to any one of the preceding claims, wherein a portion (104b) of the second substrate (104) is exposed at a side edge of the panel element (100).

6. Panel element (100) according to any one of the preceding claims, wherein the distance material (104a) of the second substrate (104) comprises a material chosen from the group consisting of: a honeycomb material, a polymeric foam, a plurality of parallelly extending hollow tube sections, a glass foam, a metal comprising foam, a fibre reinforced polymeric material, a closed cell PVC foam, a material including cavates, a material including cavates of different geometric shapes, and a cardboard material.

7. Panel element (100) according to any one of the preceding claims, wherein the distance material (104a) of the second substrate (104) comprises an open cell material provided with a top layer (104t) and a bottom layer (104b) for closing a cell structure of the open cell material.

8. Panel element (100) according to any one of the preceding claims, wherein when the second substrate (104) is embedded in the first substrate (102), the distance material (104a) is provided with a channel (104c) extending in a normal direction to a major surface of the panel (100), wherein the first substrate (102) extends through the channel (104c).

9. Panel element (100) according to any one of the preceding claims, wherein the at least two opposing side edge portions (103) comprise complementary coupling members (103a, 103b) configured for mutual coupling of adjacent panel elements (100).

10. Method (300) for forming a panel element (100), such as a floor panel, a wall panel, a ceiling panel or a decking panel, the method (300) comprising:
providing (302) a first extrusion flow (EF1) of a synthetic composite material (102a) comprising at least 20% by weight of mineral material,
providing (304) a second extrusion flow (EF2) of the synthetic composite material (102a),
providing (306) a distance material (104a),
applying (308) the first and the second extrusion flows (EF1, EF2) from opposite sides of the distance material (104a), such that the first and the second extrusion flows (EF1, EF2) form a first substrate (102) embedding or recessing the distance material (104a) forming a second substrate (104), thereby forming the panel element (100) comprising at least two opposing side edge portions (103) formed solely by the first substrate (102).

11. Method (300) according to claim 10, wherein the distance material (104a) is provided in roll form (208) or sheet form (104f) and is fed to an application point (AP) at which the first and the second extrusion flows (EF1, EF2) are applied from opposite sides of the distance material (104a).

12. Method (300) according to claim 10 or 11, wherein a plurality of panel elements (100) is formed in a continuous and/or parallel process.

13. Method (100) according to any one of claims 10-12, wherein the distance material (104a) is provided in form of a plurality of discrete distance material elements (104e) connected by a supporting material (208a).

14. Method (300) according to any one of claims 10-13, the method further comprises:
subjecting (310) the panel element (100) to a thickness control operation.

15. Extrusion device (200) configured to form a panel element (100) according to any one of claims 1-9, the device (200) comprising:
a first extrusion nozzle (202) configured to provide a first extrusion flow (EF1) of the synthetic composite material (102a),
a second extrusion nozzle (204) configured to provide a second extrusion flow (EF2) of the synthetic composite material (102a), and
a space (206) formed between the first extrusion nozzle (202) and the second extrusion nozzle (204), the space (206) being configured to receive the distance material (104a) such that the first and the second extrusion flows (EF1, EF2) are applied from opposite sides of the distance material (104a), such that the first and the second extrusion flows (EF1, EF2) form the first substrate (102) embedding or recessing the distance material (104a) forming the second substrate (104), thereby forming the panel element (100) comprising at least two opposing side edge portions (103) formed solely by the first substrate (102).
